# EUROPÄISCHE PATENTSCHRIFT

(11) **EP 3 396 064 B1**
(45) Veröffentlichungstag und Bekanntmachung des Hinweises auf die Patenterteilung: **04.12.2019**
(21) Anmeldenummer: 18167158.7
(22) Anmeldetag: 13.04.2018
(51) Int. Cl.: D21C 9/00, D21C 9/02, D21B 1/06

(54) **VORRICHTUNG ZUM ENTWÄSSERN, ZERFASERN UND FÖRDERN VON ALTPAPIER, ZELLSTOFF ODER HOLZHACKSCHNITZELN**
DEVICE FOR DEWATERING, DISASSEMBLING AND CONVEYING WASTE PAPER, PULP OR WOOD CHIPS
DISPOSITIF D'ÉGOUTTAGE, DE DÉFIBRAGE ET DE TRANSPORT DE VIEUX PAPIERS, DE CELLULOSE OU DE COPEAUX DE BOIS

(30) Priorität: 27.04.2017 DE 102017109080
(43) Veröffentlichungstag der Anmeldung: 31.10.2018
(73) Patentinhaber: Betz, Guenter, 4805 Brittnau (CH)
(72) Erfinder: Betz, Günter, 4805 BRITTNAU (CH)
(74) Vertreter: DREISS Patentanwälte PartG mbB

(56) Entgegenhaltungen:
- WO-A1-2005/053850
- DE-B- 1 199 604
- US-A- 1 078 415

## Beschreibung

Um Fasern zur Herstellung von Papier und/oder Pappe zu erzeugen, ist es seit langem bekannt, Zellstoff, Altpapier oder Holzhackschnitzel zu zerfasern, um daraus die gewünschten Fasern zu gewinnen.

Dabei weisen das Zerfasern von Altpapier, Zellstoff oder Hackschnitzeln zwar Übereinstimmungen auf, jedoch bestehen erhebliche Unterschiede hinsichtlich des Zusammenhalts zwischen den einzelnen Fasern, der Belastbarkeit der Fasern und anderer technologisch wichtiger Parameter. Daher ist es nicht möglich, die Ausgangsstoffe Altpapier, Zellstoff oder Hackschnitzeln in einer Vorrichtung zu Zerfasern.

Aus der US 1 078 415 ist eine Maschine zum Schleifen von Holz bekannt, die dazu dient Zellstoffasern zur Papierherstellung zu erzeugen. Diese Maschine umfasst einen kegelstumpfförmigen Rotor und ein zylindrisches Gehäuse, welches den Rotor umgibt. Der Rotor ist mit einer Vielzahl auswechselbarer Schleifelemente versehen, welche das in dem Gehäuse befindliche Holz zerfasern.

Ähnliche Vorrichtungen sind aus der US 3 806 050 und der WO 2005/053850 A1 bekannt. Bei diesen Vorrichtungen sind sowohl der Rotor als auch das Gehäuse zylindrisch.

Aus der der US 2005/0116074 A1 ist eine Vorrichtung mit zylindrischem Gehäuse bekannt. Der Rotor umfasst eine Rotorwelle auf der in axialer Richtung zueinander beabstandet mehrere Scheiben mit auswechselbaren "Zähnen" zum Zerfasern angeordnet sind.

Allgemein ist ein Trend in der Papierindustrie zu verzeichnen, dass Fasern aus unterschiedlichen Rohstoffquellen eingesetzt werden, je nach Verfügbarkeit und Preis. In anderen Worten: Es besteht ein Bedarf an einer Vorrichtung zur Herstellung von Fasern aus Altpapier, Zellstoff und/oder Hackschnitzeln, die sehr flexibel ist und in kürzester Zeit zur Bearbeitung unterschiedlicher faserhaltiger Ausgangsstoffe umgerüstet werden kann. Der Erfindung liegt die Aufgabe zugrunde, eine Lösung zur effektiven und wirtschaftlichen Deckung dieses Bedarfs bereitzustellen.

Diese Aufgabe wird bei der erfindungsgemäßen Vorrichtung zum Entwässern, Zerfasern und Fördern von Altpapier, Zellstoff oder Holzhackschnitzeln dadurch gelöst, dass die Vorrichtung einen Rotor, einen Stator und ein Gehäuse umfasst, wobei der Rotor jeweils kreiszylindrisch oder kegelstumpfförmig ausgebildet ist, wobei an einer Mantelfläche des Rotors mehrere Schlagplatten lösbar befestigt sind, wobei der Stator als regelmäßiges Prisma oder regelmäßiger Pyramidenstumpf ausgebildet ist und wobei der Stator mehrere auswechselbare Statorplatten aufweist.

Durch diese Flexibilität sowohl bezüglich des Rotors als auch des Stators ist es möglich, alle verfügbaren Ausgangsstoffe, insbesondere Holzhackschnitzel, Altpapier und Zellstoff in einem Arbeitsgang zu entwässern, sie zu zerfasern, d.h. die Fasern zu vereinzeln, quetschen oder zerkleinern, und das Material durch die Vorrichtung zu fördern.

Diese drei Funktionen "entwässern", "zerfasern" und "fördern". können mit der erfindungsgemäßen Vorrichtung realisiert werden. Dabei ist es auch möglich, auf einzelne Funktionen zu verzichten. Beispielsweise kann der Arbeitsgang "entwässern" entfallen, wenn das zugeführte Material bereits den gewünschten Faseranteil aufweist.

Durch eine entsprechende Auslegung der Schlagplatten des Rotors und der Statorplatten kann das zugeführte Material nicht nur zerfasert, d.h. vereinzelt, werden, sondern auch gequetscht (fibrilliert) und/oder gekürzt werden.

Dies geschieht durch das Auswechseln der Schlagplatten des Rotors und/oder der Statorplatten des Stators. Dadurch kann beispielsweise der Mindestspalt zwischen den Schlagplatten des Rotors und den Statorplatten eingestellt werden. Dadurch werden die Fasern mehr oder weniger gequetscht oder sogar gekürzt.

Dieser Mindestspalt kann auch in Richtung der Längsachse oder Drehachse des Rotors variieren. Außerdem kann durch die Änderung der Drehzahl des Rotors und/oder das Zuführen von Dampf oder Flüssigkeit sowie das gezielte Entwässern der Arbeitsbereich der erfindungsgemäßen Vorrichtung so erweitert werden, dass die eingesetzten Faserstoffe (Papiere) nicht nur in ihre Einzelbestandteile zerlegt werden, sondern dass gleichzeitig Kräfte auf die Faseroberflächen ausgeübt werden, die geeignet sind, Druckfarben von der Oberfläche von Altpapierfasern abzureiben oder mit dem Altpapier eingetragene Verunreinigung so weit zu zerkleinern (dispergieren), dass diese Verunreinigungen unter ihre Sichtbarkeitsgrenze gelangen und somit die Qualität des Endprodukts nicht mehr mindern.

Ebenso besteht die Möglichkeit, mit Hilfe der erfindungsgemäßen Vorrichtung Verbundmaterialien (beispielsweise Getränkekartons) so zu bearbeiten, dass das Fasermaterial von der aufkaschierten Kunststoffschicht abgerieben wird und es am Ende der Vorrichtung durch Zugabe von Flüssigkeit die Fasern von den Folienoberflächen "abzuwaschen".

Aufgrund dieser extrem großen Flexibilität der erfindungsgemäßen Vorrichtung kann sie für eine Vielzahl von Fasermaterialien eingesetzt werden und ist somit eine sichere Investition, weil dadurch die Herstellung von Fasern nahezu unabhängig von der Rohstoffquelle wird.

Es hat sich als vorteilhaft erwiesen, wenn die Schlagplatten gesteckt und/oder geschraubt mit dem Rotor verbunden sind. Durch eine Steckverbindung kann eine sehr belastbare und schnell montierbare formschlüssige Verbindung zwischen Schlagplatte und Rotor hergestellt werden. Eine Schraubverbindung kann zusätzlich oder alternativ vorgesehen werden.

In weiterer vorteilhafter Ausgestaltung der Erfindung sind an der Mantelfläche des Rotors Halter für die Schlagplatten befestigt, wobei eine Auflagefläche der Halter radial nach außen gerichtet ist und ein Normalenvektor der Auflagefläche mit einer Drehachse des Rotors einen Winkel α ungleich 90° einschließt. Dies bedeutet, dass die Auflageflächen schräg gestellt sind, ähnlich einer Schraubenwendel. Die Schrägstellung der Auflageflächen ist konstruktiv fest vorgegeben.

Weil aber die eigentliche Förderwirkung von einer Vorderseite der an den Auflageflächen befestigten Schlagplatten ausgeht, kann durch Auswechseln der Schlagplatten die Förderwirkung eingestellt werden.

Es ist beispielsweise möglich, Schlagplatten mit keilförmigem Querschnitt einzusetzen. Je nachdem, wie die Schlagplatten montiert werden, addiert sich der Keilwinkel β zu dem Winkel α der Auflageflächen. Oder die Winkel α und β heben sich teilweise gegeneinander auf.

Alternativ ist es selbstverständlich auch möglich, Schlagplatten einzusetzen, deren Vorder- und Rückseite parallel zueinander verlaufen (β = 0) und einen Keil zwischen Auflagefläche und Schlagplatte einzusetzen.

Um das zu zerfasernde Material in die Vorrichtung einbringen zu können und anschließend die gewonnenen Fasern aus der Vorrichtung austragen zu können, weist das Gehäuse der erfindungsgemäßen Vorrichtung mindestens einen Einlass und mindestens einen Auslass auf.

Um das Entwässern des zugeführten Fasermaterials zu ermöglichen, weisen der Stator bzw. die eingesetzten Statorbleche mindestens einen gelochten Abschnitt auf. Dieser gelochte Abschnitt kann beispielsweise in unmittelbarer Nähe des Einlasses sein. Dann wird, bevor die eigentliche Zerfaserung des Materials beginnt, Flüssigkeit aus dem zugeführten Material abgezogen oder, anders ausgedrückt, der Faseranteil erhöht.

Es kann aber auch vorteilhaft sein, erst nachdem das zugeführte Material teilweise zerfasert wurde, Flüssigkeit abzuziehen. Dann ist der entsprechende gelochte Abschnitt beispielsweise etwa in der Mitte des Stators angeordnet.

Selbstverständlich ist es auch möglich, am Ende, d.h. in der unmittelbaren Nähe des Gehäuses, einen gelochten Abschnitt am Stator vorzusehen. So dass die erfindungsgemäße Vorrichtung flexibel an verschiedenste Anforderungen anpassbar ist und belegt deren große Flexibilität.

Es kann, je nach verwendetem Material, auch erforderlich sein, Dampf oder Wasser zuzuführen. Zu diesem Zweck ist dann bei dieser Ausgestaltung der erfindungsgemäßen Vorrichtung an einer oder mehreren Stellen eine Leitung angeschlossen, durch die Dampf oder eine Flüssigkeit (meistens auf Wasserbasis) zugeführt werden kann.

Es besteht weiter die Möglichkeit, die zerfasernde Wirkung des Stators durch den Einbau von Störleisten weiter zu erhöhen. Diese Störleisten sind letztendlich abgerundete oder eckige Flachstähle, die im Wesentlichen in Längsrichtung der Vorrichtung bzw. des Stators an den Statorplatten befestigt werden. Zwischen den Außenkanten der Schlagplatten und den Störleisten ergibt sich ein weiterer schmaler Spalt. Beim Passieren dieses schmalen Spalts wird das zu zerfasernde Material zusätzlich gequetscht. Dadurch findet eine sehr intensive Zerfaserung des Materials statt.

Es ist auch möglich, dass der Rotor und der Stator relativ zueinander in Längsrichtung verschiebbar sind. Diese Variante ist besonders vorteilhaft, wenn der Rotor kegelstumpfförmig ist und der Stator als Pyramidenstumpf ausgebildet ist. Dann kann der Spaltabstand bzw. die Dicke des Mindestspalts zwischen der Außenkante der Schlagplatten des Rotors und den Statorplatten variiert werden.

Durch diese Veränderung des Spaltabstands kann die zerfasernde Wirkung der Vorrichtung auch während des Betriebs eingestellt werden. Gleichzeitig wird auch der Leistungsbedarf der Vorrichtung verändert.

Der Leistungsbedarf des Rotors bzw. der Vorrichtung kann auch durch die Zugabe von Dampf oder Wasser oder das Entwässern der Suspension verändert werden. Durch die Zugabe von Dampf oder Wasser nimmt die Leistungsaufnahme ab.

Wenn, wie im Anspruch 7 vorgesehen, das in die Vorrichtung eingegebene Fasermaterial am Eintritt in die Vorrichtung entwässert wird, erhöht sich der Trockengehalt des Fasermaterials, was den nachfolgenden Zerfaserungsprozess deutlich begünstigt. Es handelt sich dann in der Regel um eine Dickstoff-Zerfaserung mit einer Stoffdichte zwischen 12% und 20%. Weil in diesem Fall weniger Wasser bzw. Flüssigkeit durch die Vorrichtung gefördert werden muss, nimmt der auf die Fasermenge bezogene spezifische Energieeinsatz ab.

Durch die höhere Stoffdichte nach dem Entwässern bzw. durch die Reduzierung des Flüssigkeitsanteils erhöht sich der Reibungswiderstand bzw. vergrößern sich auf das Fasermaterial wirkenden Scherkräfte deutlich. Dadurch wird die Vereinzelung von Fasern effektiver und schneller. Dieser Vereinzelungsvorgang besteht in der Hauptsache aus einer Friktion der Ausgangsstoffe (zellstoff, Altpapier, Holzhackschnitzel) an den Engstellen zwischen den Schlagplatten des Rotors und den Statorblechen.

Es hat sich als vorteilhaft erwiesen, wenn dieser Vorgang in einer Umfangsgeschwindigkeit der Schlagplatten zwischen 20 m/s und 60 m/s erfolgt.

Es ist ebenso möglich, die Vorrichtung zum Zerfasern im Dünnstoffbereich mit einer Stoffdichte zwischen 2% und 12% einzusetzen. Dann wird nicht unmittelbar nach dem Eingang des eingegebenen Fasermaterials in den Stator entwässert. In diesem Fall hat es sich als vorteilhaft erwiesen, wenn die Umfangsgeschwindigkeit der Schlagplatte etwas höher liegt, nämlich beispielsweise im Bereich von 50 m/s bis 70 m/s. In diesem Fall besteht der Vereinzelungseffekt der Fasern überwiegend aus einer Kombination von Friktion und einem Pralleffekt, d.h. einem ersten Aufprall des Fasermaterials auf den Schlagplatten des Rotorflügels und anschließend, wenn die Schlagplatten das Fasermaterial radial nach außen geschleudert haben, beim (zweiten) Aufprall des Fasermaterials auf den Statorblechen.

Ein weiterer Vorteil der am Eintritt der Vorrichtung erfolgenden Entwässerung des Fasermaterials ist darin zu sehen, dass zusammen mit der ausgetragenen Flüssigkeit kleinere Verunreinigungen, die sich in dem eingegebenen Fasermaterial befinden, wie z.B. Sand, Glassplitter oder Metallsplitter, aus der Vorrichtung ausgetragen werden und somit den Verschleiß der Vorrichtung reduzieren und am Ende das Fasermaterial eine verbesserte Qualität aufweist.

Wie bereits erwähnt, kann die erfindungsgemäße Vorrichtung auch durch das Einsetzen geeigneter Statorplatten so konfiguriert werden, dass wahlweise im Bereich des Eingangs und/oder am Ende oder an jeder anderen beliebigen Stelle der Vorrichtung entwässert wird. In dem der Entwässerung folgenden Bereich wird das Material zerfasert und dann, je nach Auslegung von Rotor und/oder Statorelementen gequetscht oder gemahlen und/oder gekürzt.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:
- Figur 1: eine perspektivische Darstellung einer erfindungsgemäßen Vorrichtung;
- Figur 2: ein Ausführungsbeispiel eines erfindungsgemäßen Stators;
- Figuren 3 bis 5: ein Ausführungsbeispiel eines erfindungsgemäßen Rotors in verschiedenen Fertigungsstadien;
- Figur 6: veranschaulicht die Schrägstellung der Halteplatten und der Schlagplatten;
- Figur 7: ein erstes Ausführungsbeispiel eines Stators in einem Querschnitt und einer Seitenansicht;
- Figur 8: verschiedene mögliche Querschnitte des erfindungsgemäßen Stators;
- Figur 9: die alternative Ausgestaltungen von gelochten Abschnitten der Statorplatten;
- Figuren 10 und 11: das Zusammenwirken eines kegelstumpfförmigen Rotors und eines pyramidenstumpfförmigen Stators;
- Figur 12: der mögliche Verlauf der Schrägstellung der Schlagplatten über die Länge des Rotors.

### Beschreibung der Ausführungsbeispiele

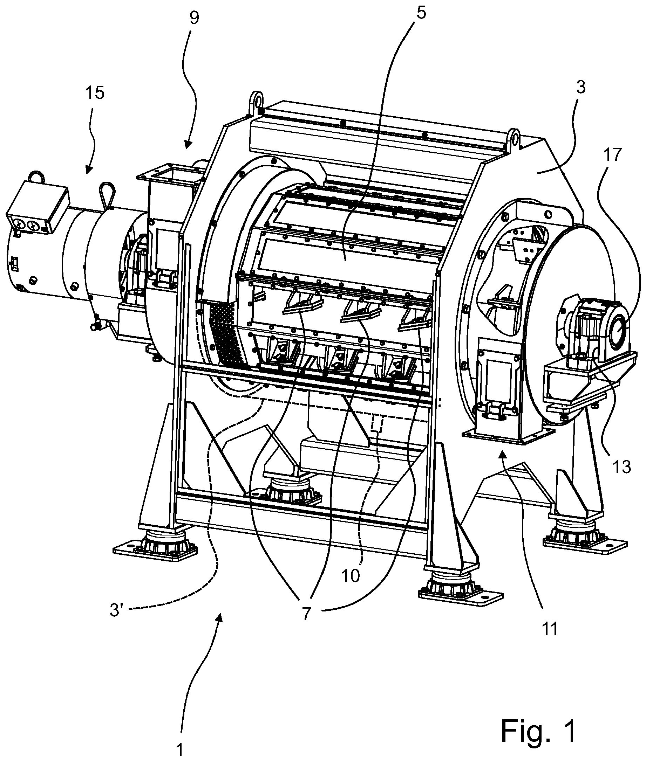

In der Figur 1 ist ein Ausführungsbeispiel einer erfindungsgemäßen Vorrichtung 1 mit teilweise geöffnetem Gehäuse 3 dargestellt.

Durch den geöffneten Teil des Gehäuses 3 sind ein Stator 5 und Schlagplatten 7 des Rotors teilweise zu erkennen. Wenn die erfindungsgemäße Vorrichtung betriebsbereit ist, dann ist der Rotor über seine ganze Länge von dem Stator umgeben. Der Stator 5 wiederum befindet sich innerhalb des geschlossenen Gehäuses 3.

Das Gehäuse 3 ist teilweise nicht dargestellt, um einen Blick ins Innere der Vorrichtung zu ermöglichen. Ein unterer Teil des Gehäuses ist als unterbrochene Linie 3' dargestellt.

An diesem Teil des Gehäuses, bevorzugt an dessen tiefstem Punkt, ist ein Stutzen 10 angeschweißt. Durch den Stutzen 10 kann Flüssigkeit aus dem Gehäuse 3 abgeführt werden und auf diese Weise die Fasern entwässert werden. Der Stutzen 10 kann auch an anderen Orten angeschweißt oder auf andere Weise befestigt werden. Es ist auch möglich mehrere Stutzen 10 vorzusehen.

An der in Figur 1 linken Seite des Gehäuses ist ein Einlass 9 und an der rechten Seite ist ein Auslass 11 vorgesehen. An den Einlass 9 wird eine Leitung (nicht dargestellt) angeschlossen, durch die mit Flüssigkeit versetztes Material (Suspension) in das Gehäuse geführt wird. Dieses Material wird in der erfindungsgemäßen Vorrichtung 1 zerfasert und teilweise entwässert. Zusätzlich können die Fasern auch gekürzt werden. Die vereinzelnden Fasern werden aus der Vorrichtung 1 über den Auslass 11 abgezogen. Wenn das zugeführte Material in der Vorrichtung entwässert wird, gibt es noch einen Abzug 10 für das Wasser. Der Abzug 10 für das Wasser ist letztendlich eine Leitung, die an dem tiefsten Punkt des Gehäuses angeschlossen wird. Dort sammelt sich das Wasser bzw. die Flüssigkeit, die von den Fasern getrennt wurde und kann einer Aufbereitung oder einer Entsorgung zugeführt werden.

Der Rotor ist rechts und links des Gehäuses 3 gelagert. In der Figur 1 ist nur ein Lagerbock 13 sichtbar. Auf der linken Seite des Gehäuses 3 ist ein Elektromotor 15 sichtbar, der bei diesem Ausführungsbeispiel direkt mit einer Rotorachse 17 gekoppelt ist. Der Elektromotor 15 ist bevorzugt drehzahlgeregelt. Besonders bevorzugt handelt es sich dabei um einen Torque-Motor mit Permanentmagneten, der hinsichtlich Drehmomentverlauf und Regelbarkeit sowie Wirkungsgrad besonders vorteilhaft ist.

Das Gehäuse 3 steht auf vier Füßen. In der dargestellten Ausführungsform verläuft die Rotorachse 17 horizontal. Es ist auch möglich, die erfindungsgemäße Vorrichtung mit vertikaler Rotorachse 17 zu realisieren. Wenn bei einer Vorrichtung mit vertikaler Rotorachse der Einlass am unteren Ende und der Auslass 11 am oberen Ende des Gehäuses 3 angeordnet ist, dann muss das Material gegen die Schwerkraft vom Einlass 9 zum Auslass 11 gefördert werden. Dadurch nimmt die Verweildauer des Materials in der erfindungsgemäßen Vorrichtung 1 zu und es wird eine besonders intensive Zerfaserung erreicht. Außerdem ist der Platzbedarf bei dieser Anordnung mit vertikaler Rotorachse 17 geringer. Die umgekehrte Anordnung von Einlass 9 und Auslass 11 ist ebenfalls möglich.

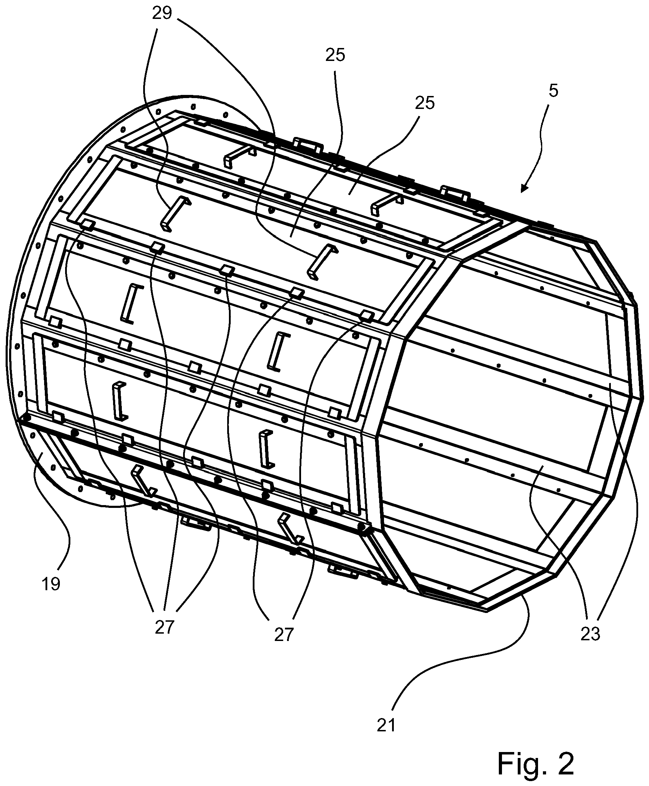

In der Figur 2 ist ein Ausführungsbeispiel eines erfindungsgemäßen Stators 5 perspektivisch dargestellt.

Bei diesem Ausführungsbeispiel hat der Stator im Querschnitt die Form eines regelmäßigen Zwölfecks. An der linken Seite ist ein Flansch 19 angeordnet. Über diesen Flansch 19 kann der Stator bzw. seine Tragstruktur mit dem Gehäuse 3 verschraubt werden. Die Tragstruktur des Stators 5 umfasst an dem dem Flansch 19 gegenüberliegenden Ende einen Ring 21, der als Zwölfeck ausgeführt ist. An den Ecken des Zwölfecks ist auch ein entsprechender Ring des Flansches 19 vorhanden. Die Ecken dieser Ringe 21 werden über Längsstreben 23 miteinander verbunden. Insgesamt umfasst die Tragstruktur also den Flansch 19, zwei Ringe 21 und bei einem zwölfeckigen Querschnitt zwölf Streben 23. Diese Tragstruktur kann als Schweißkonstruktion ausgebildet sein. An die Streben 23 werden Statorplatten 25 angebracht. Entsprechend der Zahl der Streben 23 gibt es zwölf Statorplatten.

Die Statorplatten werden bei diesem Ausführungsbeispiel auf der einen Seite in geeignete Aufnahmen 27 einer Strebe 23 eingehängt. An der benachbarten Strebe 23 wird die Statorplatte 25 mit Schrauben befestigt. An den Statorplatten 25 sind Handgriffe 29 angebracht, so dass die Statorplatte 25 einfach in die Aufnahmen 27 eingehoben werden kann.

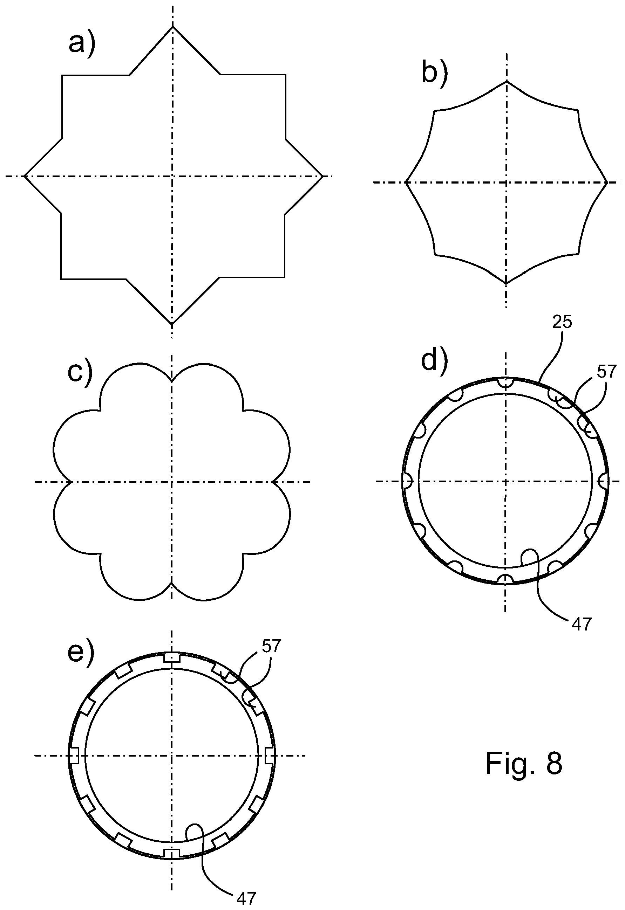

In der Figur 8 werden verschiedene Querschnittsformen des Stators 5 schematisch dargestellt. Diese lassen sich alle durch Auswechseln der Statorplatte erreichen.

Diese große Flexibilität ist ein wesentlicher Vorteil der erfindungsgemäßen Vorrichtung.

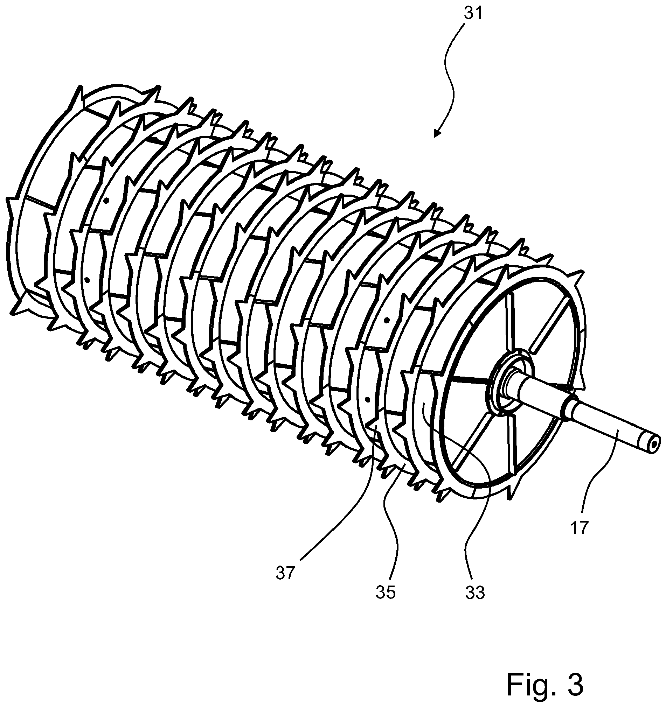

In den Figuren 3, 4 und 5 ist beispielhaft ein Rotor 31 in verschiedenen Herstellungsstadien dargestellt. An dem in diesen Figuren rechten Ende ist die Rotorachse 17 gut zu erkennen. Daran schließt sich eine zylindrische Trommel 33 an. Am Außenumfang dieser Trommel 33 sind verschiedene Ringe 35 mit sägezahnartigen Vorsprüngen 37 angebracht. Aus Gründen der Übersichtlichkeit sind nur ein Ring 35 und ein Vorsprung 37 mit Bezugszeichen versehen.

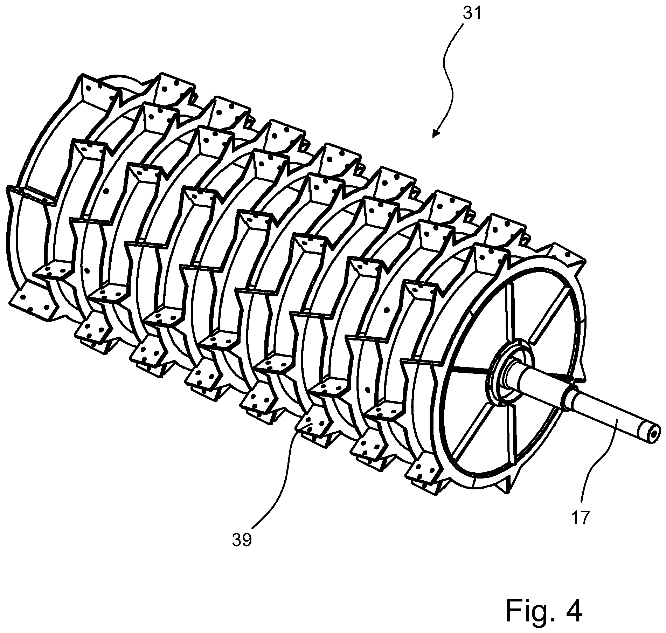

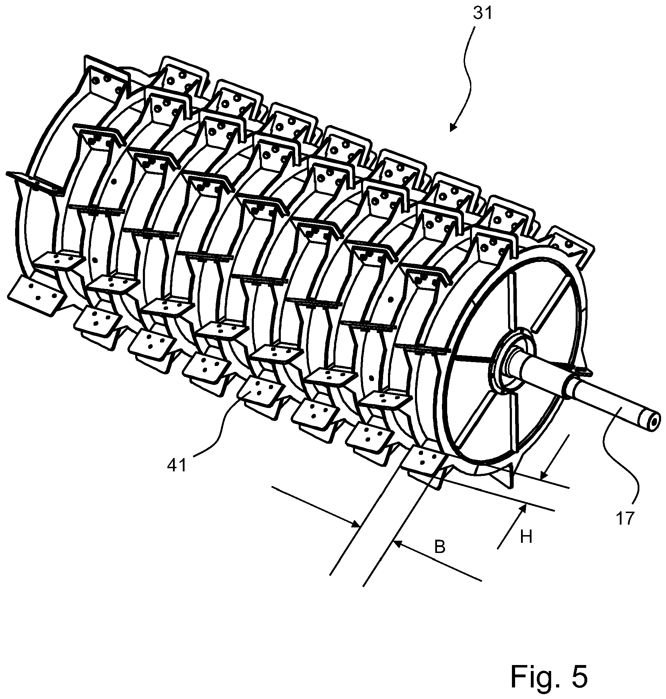

Wenn man die Figur 3 betrachtet wird deutlich, dass zwei benachbarte Zähne 37 in Umfangsrichtung etwas verdreht zueinander angeordnet sind. An zwei solcher benachbarten Zähne wird eine Halteplatte 39 angeschweißt, die dadurch ebenfalls bezogen auf die Drehachse 41 oder Längsachse der Rotorachse 17 schräg gestellt sind (siehe Figur 4). In den Halteplatten 39 sind Bohrungen (ohne Bezugszeichen) vorhanden. Durch diese Bohrungen können Schrauben gesteckt werden und dadurch die Schlagplatten 41 an die Halteplatten 39 lösbar befestigt werden. Diese Situation ist in der Figur 5 dargestellt.

Es liegt auf der Hand, dass durch das Auswechseln der Schlagplatte wichtige Eigenschaften der erfindungsgemäßen Vorrichtung beeinflusst werden können.

Beispielsweise kann durch Schlagplatten 41 mit geänderter Höhe H der wirksame Außendurchmesser des Rotors 31 geändert werden und infolgedessen ändert sich dadurch auch der Mindestspalt zwischen dem Stator 5 und den Außenkanten der Schlagplatten 41. Durch Ändern einer Breite B der Schlagplatten 41 kann ebenfalls die zerfasernde und/oder fördernde Wirkung der Schlagplatten 41 geändert werden.

Da die Schlagplatten 41 einem gewissen Verschleiß unterliegen, ist es üblich, verschiedene Sätze von Schlagplatten 41 in Reserve zu halten. So kann bei einem Wechsel des zu zerfasernden Materials durch den Austausch der Schlagplatten 41 die Wirkung des Rotors 31 auf das zu zerfasernde Material abgestimmt werden.

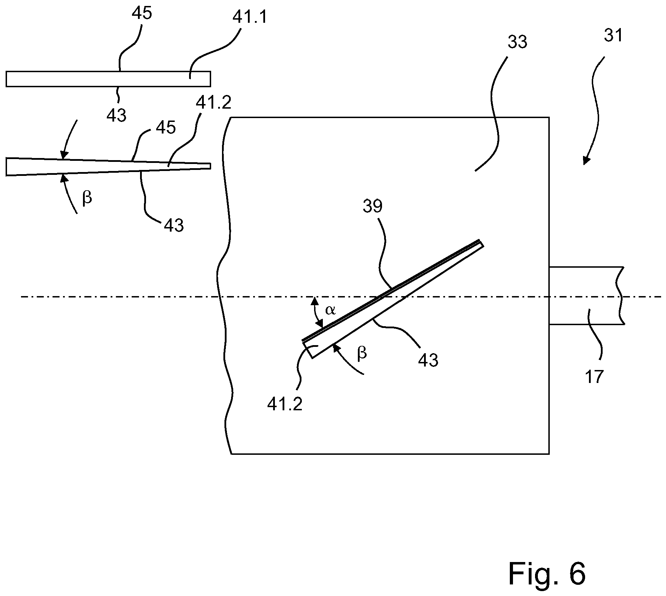

Anhand der Figur 6 wird die variable Schrägstellung der Halteplatten 39 und einer Vorderseite der Schlagplatten 41 erläutert.

In der Figur 6 ist nur eine Halteplatte 39 schematisch dargestellt. Die Halteplatte 39 schließt mit einer Drehachse des Rotors 31 einen Winkel α ein. Es ist nun möglich, verschieden geformte Schlagplatten 41 auf diese Halteplatten 39 zu schrauben.

Im linken Teil der Figur 6 sind zwei Ausführungsformen von Schlagplatten 41 dargestellt. Bei der links oben dargestellten Schlagplatte 41 verlaufen eine Vorderseite 43 und eine Rückseite 45 parallel zueinander (β = 0). Wenn die mit 41.1 bezeichnete Schlagplatte auf die Halteplatte 39 geschraubt wird, hat die Vorderseite 43 zur Drehachse des Rotors einen Winkel α.

Bei dem etwas weiter unten dargestellten Ausführungsbeispiel einer Schlagplatte 41.2 schließen die Vorderseite 43 und die Rückseite 45 einen Winkel β ein, wobei der Winkel β ungleich dem Winkel α ist.

Je nachdem, wie man die Schlagplatte 41.2 auf der Halteplatte 39 montiert, kann somit die Vorderseite 43 der Schlagplatte 41.2 einen Winkel α + β mit der Drehachse des Rotors 31 einschließen oder einen Winkel α - β mit der Drehachse des Rotors 31 einschließen.

Dadurch ist es auf einfache Weise möglich, drei verschiedene Schrägstellungen der Vorderseiten 43 der Schlagplatten 41 zu erreichen (α, α + β und α - β).

In den meisten Fällen reichen diese drei verschiedenen Winkel aus, um die Förderwirkung der Schlagplatten 41 an den gewünschten Einsatzzweck anzupassen.

Es ist alternativ natürlich auch möglich, nur Schlagplatten 41.1 zu verwenden und den Winkel β durch das Unterlegen von Keilen zwischen Halteplatte 39 und Schlagplatte 41 einzustellen. Auch hier zeigt sich wieder die große Flexibilität der erfindungsgemäßen Vorrichtung.

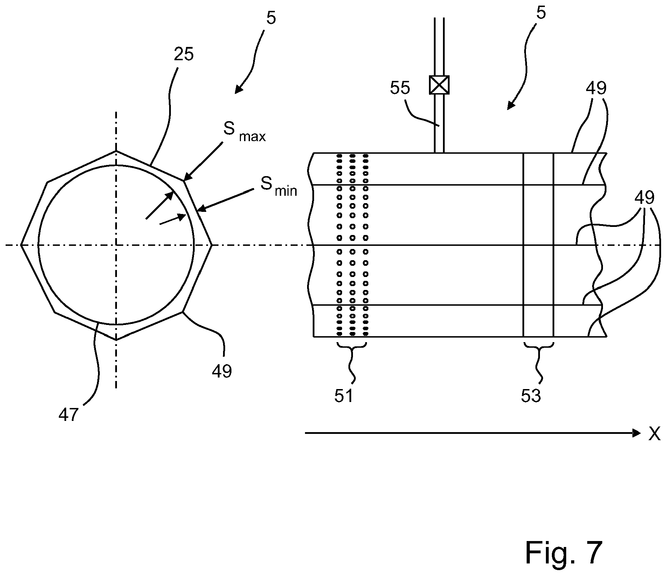

In der Figur 7 ist ein Querschnitt durch ein Ausführungsbeispiel eines erfindungsgemäßen Stators und eines Rotors 31 sowie eine Seitenansicht des Stators 5 dargestellt. Bei diesem Ausführungsbeispiel hat der Stator 5 im Querschnitt die Form eines regelmäßigen Achtecks. Infolgedessen gibt es auch acht Statorplatten 25, von denen nur eine mit Bezugszeichen versehen wurde. Der Rotor 31 wurde nur durch einen Kreis 47 angedeutet, der die Umlaufbahn der Außenkanten der Schlagplatten 41 beschreibt. Wenn der Rotor angetrieben wird, dann bewegen sich die Außenkanten der Schlagplatten 41 an den Statorplatten 25 vorbei. Dabei ändert sich der Abstand in radialer Richtung zwischen den Außenkanten der Schlagplatten 41 und den Statorplatten 25 periodisch.

Ein maximaler Abstand Sₘₐₓ stellt sich ein wenn eine Schlagplatte 41 sich an einer Ecke des Stators befindet. Das Minimum Sₘₐₓ wird in der Mitte zwischen zwei Ecken des Stators 5 erreicht. Diese beiden Abstände sind mit Sₘₐₓ und Sₘᵢₙ in dem linken Teil der Figur 7 eingetragen. Der Mindestabstand Sₘᵢₙ zwischen den Außenkanten der Schlagplatten 41 und den Statorplatten 25 ist eine wichtige Größe zum Einstellen der zerfasernden Wirkung der erfindungsgemäßen Vorrichtung.

In der Figur 7 ist in der rechten Hälfte eine Seitenansicht auf den Stator 5 dargestellt. Die Kanten 49 sind in der Seitenansicht gut zu erkennen. Im linken Teil der Figur 7 sind die Kanten 49 als Ecken sichtbar. In der Figur 7 ist rechts unten eine Längenkoordinate (X-Achse) eingezeichnet.

Es gibt bei dem dargestellten Stator 5 zwei gelochte Abschnitte 51 und 53. Zur Veranschaulichung ist in dem gelochten Abschnitt 51 eine Vielzahl von Löchern (ohne Bezugszeichen) eingezeichnet. Im Bereich des zweiten gelochten Abschnitts 53 ist dies nicht der Fall. Selbstverständlich können die Löcher oder Durchbrüche in den Statorplatten 25 auch andere Geometrien aufweisen. Es können Langlöcher und/oder unregelmäßig geformte Durchbrüche vorgesehen sein.

Wenn das Ausgansmaterial (Altpapier, Zellstoff Holzhackschnitzel) beginnend bei X = 0 durch die erfindungsgemäße Vorrichtung gefördert wird, wird es von den Schlagplatten 41 erfasst und radial nach außen auf die Statorplatten 25 geschleudert. Dort wo die gelochten Abschnitte 51 bzw. 53 sind, fließt das Wasser durch die Löcher nach außen in das Gehäuse 3 ab und die Fasern verbleiben im Inneren des Stators 25. Dadurch erfolgt eine Entwässerung des Ausgangsmaterials. Es ist mit der erfindungsgemäßen Vorrichtung auch möglich, nacheinander zu entwässern und Flüssigkeit zuzuführen, wenn dies aus technologischen Gründen erforderlich sein sollte.

Zu diesem Zweck ist schematisch in der Figur 7 beispielhaft eine Leitung 55 eingezeichnet. Über diese Leitung 55 kann Wasser in das Innere des Stators 5 eingebracht werden und somit der Feuchtigkeitsgehalt der Fasern erhöht werden. Die Leitung 55 kann über ein Stromventil geschlossen oder geöffnet werden, so dass der über die Leitung 55 zugeführte Dampf oder die zugeführte Flüssigkeit bzw. deren Volumenstrom geregelt werden kann.

In der Figur 8 sind verschiedene Ausführungsbeispiele von Querschnitten des Stators 5 schematisch dargestellt. Die Ausführungsbeispiele a, b und c sind selbsterklärend. Sie werden durch Auswechseln der Statorplatten 25 erreicht. Das Gehäuse bzw. die Tragstruktur des Stators 5 kann unverändert bleiben.

In dem Ausführungsbeispiel d und e der Figur 8 sind die Statorplatten 25 so gekrümmt, dass sich eine zylindrische Außenkontur des Stators 5 einstellt. Um trotzdem den gewünschten Wechsel zwischen einem minimalen Abstand Sₘₐₓ und Sₘᵢₙ zwischen den Außenkanten der Schlagplatten des Rotors und den Statorplatten zu erreichen, sind Störleisten 57 an den Statorplatten 25 befestigt. Die Störleisten können im Querschnitt halbkreisförmig oder als Quadrat bzw. Rechteck ausgebildet sein. Die Störleisten 57 verlaufen im Wesentlichen in Längsrichtung des Stators, d.h. senkrecht zur Zeichnungsebene in der Figur 8.

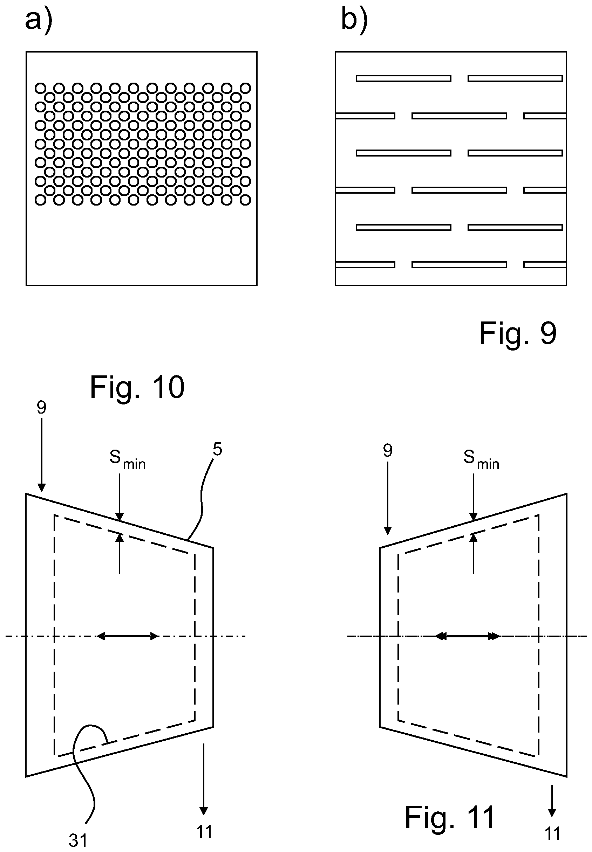

In der Figur 9a und b sind verschiedene Lochmuster der gelochten Abschnitte 51 und 53 dargestellt.

In der Figur 10 und 11 sind Ausführungsbeispiele der erfindungsgemäßen Vorrichtungen schematisch dargestellt, bei der der Stator 5 als Pyramidenstumpf und der Rotor 31 als Kegelstumpf ausgebildet sind. Wie durch einen Doppelpfeil 59 angedeutet, ist es möglich, den Rotor 31 und den Stator 5 relativ zueinander in Richtung der Drehachse des Rotors 31 zu verschieben. Dadurch kann der minimale Abstand Sₘᵢₙ zwischen der Außenkante der Schlagplatten 41 und dem Stator 5 bzw. den Statorplatten 25 bzw. der Störleisten 57 variiert werden.

Wenn, wie in Figur 10 dargestellt, der Durchmesser des Rotors 31 im Bereich des Einlasses 9 größer ist als im Bereich des Auslasses, dann ist dort die Umfangsgeschwindigkeit des Rotors maximal. Somit wird das zugeführte Material mit größter Geschwindigkeit von den Schlagplatten 41 erfasst und anschließend mit hohem Impuls auf die Statorplatten 25 geschleudert. Dieser Effekt nimmt dann in Richtung des Auslasses 11 ab. Den gegenteiligen Effekt kann man erzielen, wenn der Rotor 31 im Bereich des Einlasses 9 seinen minimalen Durchmesser hat und in Richtung des Auslasses 11 zunimmt. Diese Situation ist in der Figur 11 dargestellt.

In den Figuren 10 und 11 ist die Situation dargestellt, dass der minimale Abstand Sₘᵢₙ über die gesamte Länge von Stator 5 und Rotor 31 konstant ist. Dies muss nicht so sein. Es ist auch möglich, dass der minimale Abstand im Bereich des Einlasses kleiner ist als im Bereich des Auslasses. Dann wird im Bereich des Einlasses eine maximale Zerfaserungswirkung erzielt und im Bereich des Auslasses, wenn das Material schon weitestgehend zerfasert ist, und infolgedessen ein größeres Volumen einnimmt, wird der minimale Abstand Sₘᵢₙ vergrößert. Dadurch wird das Brechen der Fasern bzw. das Kürzen der Fasern im Bereich des Auslasses verringert. Außerdem sinkt die Leistungsaufnahme des Motors 15, der den Rotor 31 antreibt.

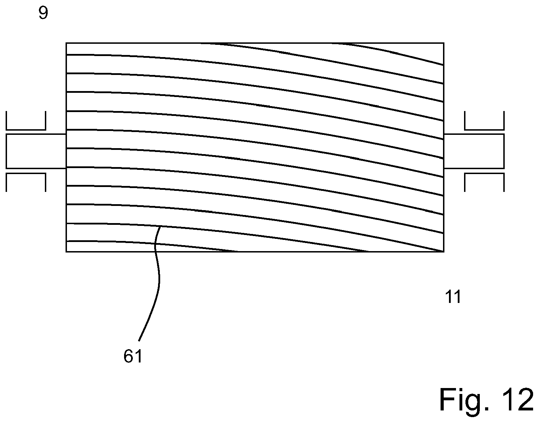

In der Figur 12 ist ein weiteres Ausführungsbeispiel dargestellt, das veranschaulicht, dass die Schrägstellung der Vorderseiten der Schlagplatten 41 über die Länge des Rotors nicht konstant sein muss. Es ist auch möglich, dass die Schrägstellung im Bereich des Einlasses anders ist als im Bereich des Auslasses. Dieser Effekt ist durch die gekrümmten Linien 61 in der Figur 12 angedeutet.

## Patentansprüche

1. Vorrichtung zum Entwässern, Zerfasern und Fördern von Altpapier, Zellstoff oder Holzhackschnitzeln umfassend einen Rotor (31), einen Stator (5) und ein Gehäuse (3), wobei der Rotor (31) als Kreiszylinder oder Kegelstumpf ausgebildet ist, wobei an einer Mantelfläche des Rotors (31) mehrere Schlagplatten (41) lösbar befestigt sind und wobei der Stator (5) mehrere auswechselbare Statorplatten (25) aufweist, **dadurch gekennzeichnet, dass** der Stator (5) als regelmäßiges Prisma oder regelmäßiger Pyramidenstumpf ausgebildet ist.

2. Vorrichtung nach Anspruch 1, **dadurch gekennzeichnet, dass** an der Mantelfläche des Rotors (31) Halter für die Schlagplatten (41) befestigt sind, und dass eine Halteplatte (39) der Halter radial nach außen ausgerichtet ist und ein Normalenvektor der Halteplatte (39) mit einer Drehachse des Rotors (31) einen Winkel (α) ungleich 90° einschließt.

3. Vorrichtung nach Anspruch 2, **dadurch gekennzeichnet, dass** die Schlagplatten (41) an den Halteplatten (39) des Rotors (31) mittels einer Steckverbindung und/oder einer Schraubverbindung lösbar befestigt sind.

4. Vorrichtung nach Anspruch 2 oder 3, **dadurch gekennzeichnet, dass** eine Vorderseite (43) der Schlagplatten (41) und die Halteplatten (39) nicht parallel zueinander sind.

5. Vorrichtung nach Anspruch 4, **dadurch gekennzeichnet, dass** die Schlagplatten (41) im Querschnitt keilförmig sind, so dass eine Vorderseite (43) und eine Rückseite (45) der Schlagplatten (41) nicht parallel sind.

6. Vorrichtung nach einem der vorhergehenden Ansprüche **dadurch gekennzeichnet, dass** das Gehäuse (3) einen Einlass (9) und mindestens einen Auslass (11) aufweist.

7. Vorrichtung nach einem der vorhergehenden Ansprüche **dadurch gekennzeichnet, dass** der Stator (5) mindestens einen gelochten Abschnitt (51, 53) umfasst.

8. Vorrichtung nach einem der vorhergehenden Ansprüche **dadurch gekennzeichnet, dass** an dem Stator (5) mindestens eine Leitung (55) zum Zuführen von Flüssigkeit oder Dampf angeordnet ist.

9. Vorrichtung nach einem der vorhergehenden Ansprüche **dadurch gekennzeichnet, dass** der Stator (5) mehrere Störleisten (57) umfasst.

10. Vorrichtung nach einem der vorhergehenden Ansprüche **dadurch gekennzeichnet, dass** der Rotor (31) und der Stator (5) relativ zueinander in Richtung einer Drehachse des Rotors (31) verschiebbar sind.

11. Vorrichtung nach einem der vorhergehenden Ansprüche **dadurch gekennzeichnet, dass** eine Mindest-Spaltbreite (Sₘᵢₙ) zwischen den Schlagplatten (41) des Rotors (31) und dem Stator (5) in Richtung der Drehachse/Längsachse des Rotors (31) zu- oder abnimmt.

## Claims

1. Device for dewatering, defibrating and conveying waste paper, pulp or wood chips, comprising a rotor (31), a stator (5) and a housing (3), the rotor (31) being in the form of a circular cylinder or truncated cone, wherein a plurality of baffle plates (41) is detachably mounted on a circumferential surface of the rotor (31) and wherein the stator (5) comprises a plurality of exchangeable stator plates (25), **characterized in that** the stator (5) is in the form of a regular prism or a regular truncated pyramid.

2. Device as claimed in claim 1, **characterized in that** supports for the baffle plates (41) are attached to the circumferential surface of the rotor (31) and that a supporting plate (39) of the support is oriented radially outward and a normal vector of the support plate (39) encloses an angle (α) different from 90° with the axis of rotation of the rotor (31).

3. Device as claimed in claim 2, **characterized in that** the baffle plates (41) are detachably attached to the support plates (39) of the rotor (31) by means of a plug-in connection or a screwed connection.

4. Device as claimed in claim 2 or 3, **characterized in that** a front face (43) of the baffle plates (41) and the support plates (39) are not parallel to each other.

5. Device as claimed in claim 4, **characterized in that** the baffle plates (41) have a wedge-shaped cross-section so that a front face (43) and a rear face (45) of the baffle plates (41) are not parallel to each other.

6. Device as claimed in one of the preceding claims, **characterized in that** the housing (3) comprises an inlet (9) and at least one outlet (11).

7. Device as claimed in one of the preceding claims, **characterized in that** the stator (5) comprises at least one perforated section (51, 53).

8. Device as claimed in one of the preceding claims, **characterized in that** at least one conduit (55) for the supply of liquid or steam is arranged on the stator (5).

9. Device as claimed in one of the preceding claims, **characterized in that** the stator (5) comprises a plurality of perturbance battens (57).

10. Device as claimed in one of the preceding claims, **characterized in that** the rotor (31) and the stator (5) are displaceable relative to one another in the direction of the axis of rotation of the rotor (31).

11. Device as claimed in one of the preceding claims, **characterized in that** a minimum gap width (Sₘᵢₙ) between the baffle plates (41) of the rotor (31) and the stator (5) increases or decreases in the direction of the axis of rotation/longitudinal axis of the rotor (31).

## Revendications

1. Dispositif d'égouttage, de défibrage et de transport de vieux papiers, de cellulose ou de copeaux de bois comprenant un rotor (31), un stator (5) et un logement (3), dans lequel le rotor (31) est réalisé sous la forme d'un cylindre circulaire ou cône tronqué, dans lequel plusieurs plaques de percussion (41) sont fixées de manière détachable sur une surface extérieure du rotor (31) et dans lequel le stator (5) présente plusieurs plaques de stator (25) interchangeables, **caractérisé en ce que** le stator (5) est réalisé sous la forme d'un prisme régulier ou d'une pyramide tronquée régulière.

2. Dispositif selon la revendication 1, **caractérisé en ce que** des supports pour les plaques de percussion (41) sont fixés sur la surface extérieure du rotor (31), et **en ce qu'**une plaque de retenue (39) des supports est orientée radialement vers l'extérieur et un vecteur normal de la plaque de retenue (39) forme avec un axe de rotation du rotor (31) un angle (α) différent de 90°.

3. Dispositif selon la revendication 2, **caractérisé en ce que** les plaques de percussion (41) sont fixées de manière détachable sur les plaques de retenue (39) du rotor (31) au moyen d'une liaison enfichée et/ou d'une liaison vissée.

4. Dispositif selon la revendication 2 ou 3, **caractérisé en ce qu'**une face avant (43) des plaques de percussion (41) et les plaques de retenue (39) ne sont pas parallèles les unes aux autres.

5. Dispositif selon la revendication 4, **caractérisé en ce que** les plaques de percussion (41) sont cunéiformes en section transversale, de sorte qu'une face avant (43) et une face arrière (45) des plaques de percussion (41) ne sont pas parallèles.

6. Dispositif selon l'une quelconque des revendications précédentes, **caractérisé en ce que** le logement (3) présente une entrée (9) et au moins une sortie (11).

7. Dispositif selon l'une quelconque des revendications précédentes, **caractérisé en ce que** le stator (5) comprend au moins une partie perforée (51, 53) .

8. Dispositif selon l'une quelconque des revendications précédentes, **caractérisé en ce qu'**au moins une conduite (55) destinée à amener un liquide ou de la vapeur est disposée sur le stator (5).

9. Dispositif selon l'une quelconque des revendications précédentes, **caractérisé en ce que** le stator (5) comprend plusieurs baguettes déflectrices (57) .

10. Dispositif selon l'une quelconque des revendications précédentes, **caractérisé en ce que** le rotor (31) et le stator (5) sont mobiles l'un par rapport à l'autre en direction d'un axe de rotation du rotor (31).

11. Dispositif selon l'une quelconque des revendications précédentes, **caractérisé en ce qu'**une largeur de fente minimale (Sₘᵢₙ) entre les plaques de percussion (41) du rotor (31) et le stator (5) augmente ou diminue en direction de l'axe de rotation/axe longitudinal du rotor (31).
